# EUROPEAN PATENT SPECIFICATION

(11) **EP 1 503 636 B1**
(45) Date of publication and mention of the grant of the patent: **20.12.2006**
(21) Application number: 03725386.1
(22) Date of filing: 12.05.2003
(51) Int. Cl.: A41D 1/00, A41D 27/28

(54) **GARMENT VENTILATION STRUCTURE**
BELÜFTUNGSVORRICHTUNG FÜR BEKLEIDUNG
STRUCTURE D'AERATION DE VETEMENT

(30) Priority: 10.05.2002 GB 0210733; 06.07.2002 GB 0215729
(43) Date of publication of application: 09.02.2005
(73) Proprietor: Messiou, Antoine Yvon, Leicester LE3 3DH (GB)
(72) Inventor: Messiou, Antoine Yvon, Leicester LE3 3DH (GB)
(74) Representative: Smith, Peter James
(86) International application number: PCT/GB2003/002019
(87) International publication number: WO 2003/094643

(56) References cited:
- GB-A- 379 600
- GB-A- 658 509
- US-A- 317 711
- US-A- 4 731 883

## Description

This invention relates to garments including leisure apparel, sports apparel, and more particularly to sports shirts. In many activities, where sports and leisure apparel is worn, there is a demand for lightweight apparel, which is cool and comfortable, and has other desirable properties including moisture and perspiration transmission away from the wearer. In addition, fabrics and shirts with good wear characteristics and machine washability are desirable.

Manufacturers skilled in the art have developed a variety of synthetic fabrics that provide many properties advantageous to their use as sports-shirts fabric. COOLMAX^{®} for example, is a polyester fabric, which has many of the desirable properties, cited previously. Other fabrics based on acrylic, acetate, Lycra (registered trade name) and nylon are also available with similarly desirable properties. U.S. patent no. 5,297,296 Moretz et al describes a high performance moisture transport fabric.

The technology of sports shirts, including T-shirts, particularly in shape and geometry, follows traditional configuration in the main, with small and mainly aesthetic differences between manufacturers. Such configurations rely almost exclusively on the noted high performance fabrics providing the wearer with all the desired characteristics and comfort.

Unlike traditional sports shirts, the present invention is directed to improve wearer comfort by providing novel air channels for ventilation at selected points around the wearer's torso. Other structures may be provided in conjunction with the ventilation channels. Unlike a shirt that might provide ventilation by simple open holes or a large mesh, the channel openings in the present invention are concealed, thus protecting the wearer from sunlight and harmful U.V. radiation. It may also be desirable for aesthetic reasons to conceal the holes in the garment. Improved fabrication techniques, which exploit the thermoplastic nature of synthetic fabrics are also employed. It is well known that thermographic analysis of the human body shows that strenuous activity generates localised heat build-up around the chest and back as well as the upper arm. The thermal profile will naturally vary depending on many factors such as body size and the type of activity. Generally, the heart and main upper body muscles are the major areas of heat generation. Such heat generation induces perspiration in the body, causing the shirt wearer discomfort. Perspiration and discomfort can occur anywhere on the body if covered by a heavy or insulating layer.

Document US-A-317 711 describes a sport shirt incorporating separate vertical ventilation channels, according to the preamble of claim 1.

The present invention is intended to improve heat dissipation and reduce perspiration, at selected areas by improved ventilation. The provision of ventilation by near vertical air columns, guided by the channels, works with the natural direction of heat convection and serves to improve wearer comfort. For an effective channel depth D, the actual channel depth, for a channel width w must be D + d where d can calculated approximately from the formula d = w²/ 8 r , where r is the minimum localised body radius in a horizontal plane. In one embodiment, ventilation at the front and rear of the torso is provided by four vertical channels in total. In another embodiment, multiple channels in close proximity provide ventilation. Embodiments with non-vertical channels, are also described for application when, for instance, body shape or aesthetics impose design constraints. It is not necessary to improve ventilation at all points within the torso to afford improvement in wearer comfort and coolness. High performance synthetic fabric with known advantages is used as the main shirt material within the invention.

In another embodiment, the ventilation channels possess different shapes and cross-sectional areas at different temperatures. In this way, comfort would be further improved by providing ventilation at elevated temperatures when it is most needed. A first shape would be an open channel as previously described. A second shape would be a collapsed form of the channel, which may be substantially planar with the shirt fabric. Further shapes would be within the range defined between the first and second shapes. In this embodiment, the ventilation channels are partially made out of at least one shape memory polymer. Optionally, shape memory polymer supports are attached to or integral with the ventilation channels. These may take the form of hinged buttresses, eyelets, a liner or some such combination. Optionally, shape memory polymers are used to control the channel opening geometry, as well as the channel cross section along the length of the channel.

Shape memory refers to the ability to return from a temporary shape to an original shape, i.e. to the "memorized" shape. Shape memory polymers, or thermally bi-stable polymers as they are also known, are polymers that possess this particular property. Shape memory polymers operate in two ways, irreversibly and reversibly. This embodiment mainly exploits the former phenomenon, whilst the latter is a volume change resulting from a phase change at a certain temperature. Irreversibility refers to the fact that the polymer shape change is in one direction, from a temporary shape to a permanent shape, in the case of a simple shape memory polymer. The shape memory polymer is chosen such that at least one and preferably two permanent shapes are memorized, a first shape dominating above a particular temperature and a second shape dominating below the particular temperature. This is possible through the inclusion of at least two different polymer segment species with different transition temperatures within the polymer. When taken through a heating-cooling cycle, the polymer will change from the first shape to the second shape before reverting to the first shape. It follows that above the particular temperature, the shape is temporary with respect to one segment, and below the particular temperature the shape is temporary with respect to the other segment.

The shape memory polymer will undergo a shape change above a particular temperature and in doing so will alter the geometry of the ventilation channels, so opening them. For example, as the wearer exerts himself, generated heat will cause the temperature of the shape memory polymer to increase above the particular temperature, so opening the channels. Ventilation ensues, lowering the wearer's body temperature. Subsequently, the ventilation channels will revert to the collapsed form, thus preventing ventilation. The garment is thus responsive and automatically adaptive. The shape memory polymers may optionally be actuated by electrical means or other stimuli, such as light or chemicals for example. The collapsed state is more compact and streamlined, thus reducing the overall garment volume. The garment's volume only increases when needed, so that at all other times, the reduced volume facilitates storage and renders the channels less obtrusive to the wearer, or observers. Other configurations of the shape memory polymer are possible, such as composites formed from at least one shape memory polymer.

For all embodiments, heat forming methods form the panel thermoplastic fabric into flexible air channels. Natural fabrics, including cotton, can readily be coated with a thin thermoplastic layer using vertical coating techniques and can thus be included as useable fabrics. The ends of each channel are terminated with a springy eyelet, formed by a similar process. Ultra-sonic welding is used to join the channel panel to the main fabric of the sports-shirt. Practical optimization of such techniques provides flexible, self-supporting channels, robust joints and trim.

Wearer comfort is of primary consideration in overall design geometry, material choice and the forming process. A channel structure with non-intrusive contact against the skin is created by suitable material selection and channel construction. By non-intrusive we mean that the wearer is not at all discomforted by the channel structure during the activity and moreover that he or she is virtually unaware of the channel's presence. At the extreme end of the design mix, a very stiff, unbending and intrusive channel could be provided which would maintain a constant cross-section channel where airflow is totally unaffected by body movements. This would of course not be an acceptable solution because of its intrusiveness. At the other end of the design mix, a totally unsupported channel could be provided, but this would have no functional value. Practical embodiments that compromise between wearer comfort and channel construction are thus provided, taking account of the garment within which the channels are employed

In fabrication, channel length and eyelet opening positions on the shirt will be dependent on factors such as the body size and shape, fabric material and the type of sport. Choice of fabric material, its density, gauge thickness and general characteristics will itself be influenced by similar factors; accordingly, modifications to the forming and joining method may be needed. Such minor modifications and choices will be well understood by those skilled in the manufacturing art and will not be a departure from the substance of the invention. The ventilation function of the channels will ultimately also be affected by demands of aesthetics which are also part of the manufacturers art. Again, any such demands and modifications and will not be a departure from the substance of the invention.

An object of the present invention is to provide a leisure garment or protective apparel with improved ventilation and wearer comfort.

Another object of the present invention is to provide a ventilated garment that is robust in construction, hardwearing and washable.

Still another object of the present invention is to provide a ventilated garment whose construction is amenable to economic production methods.

It is another object of the invention to provide a sports shirt that combines improved ventilation with the skin and the softness of high performance synthetic fabrics.

These and other objects of the present invention are achieved by providing self-supporting ventilation channels, non-intrusive to the body, as defined in the claims.

Embodiments of the invention will now be described by way of example with reference to the accompanying drawings in which: -
Figure 1 shows the overall view of a sports shirt with ventilation channels and eyelets.
Figure 2 shows a detailed embodiment of the channel cross-section.
Figure 3 shows another channel cross-section geometry.
Figure 4 shows details of a channel embodiment with integral liner strip.
Figure 5 shows an embodiment of a springy eyelet opening and channel assembly.

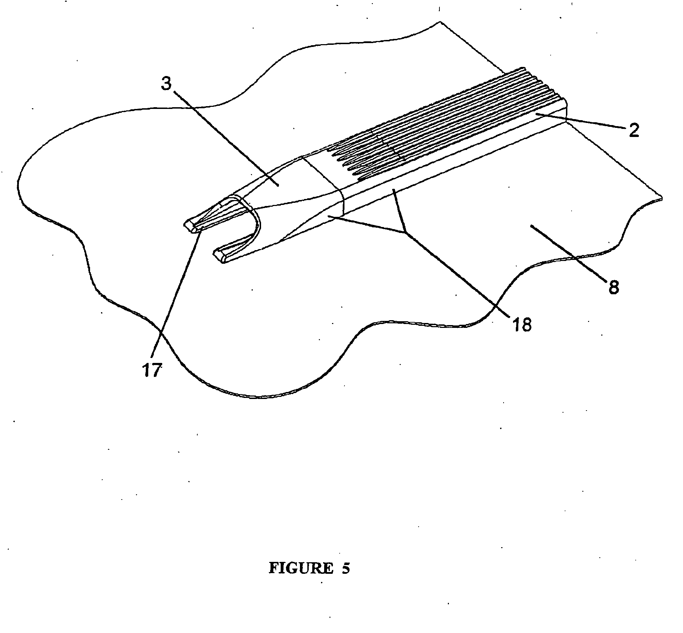

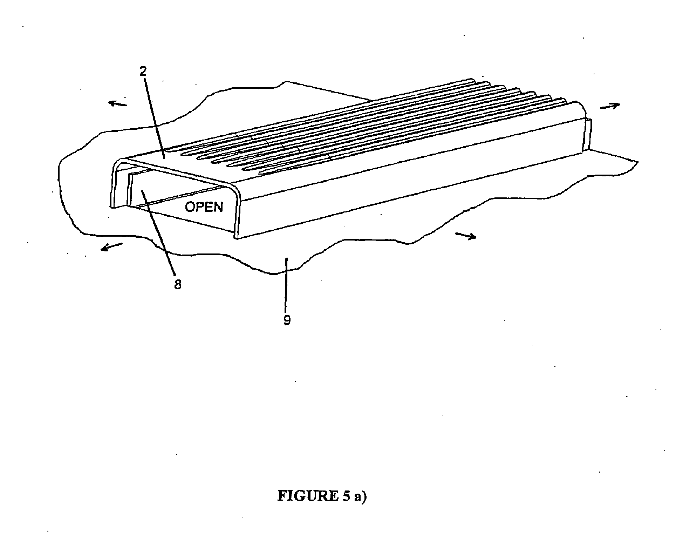

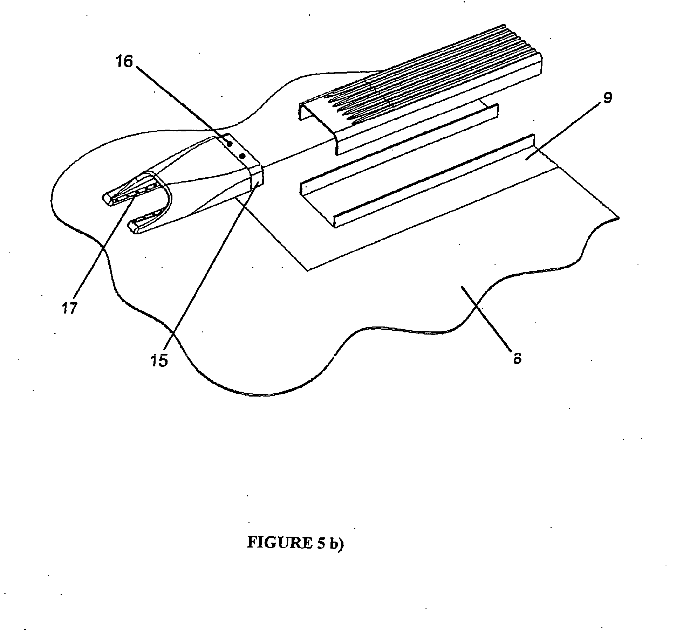

Figure 5 a) shows in cut-away view a schematic of the channel and panel fabric arrangement of Figure 5.
Figure 5 b) shows in exploded view a schematic of the channel, eyelet and panel fabric arrangement of Figure 5.

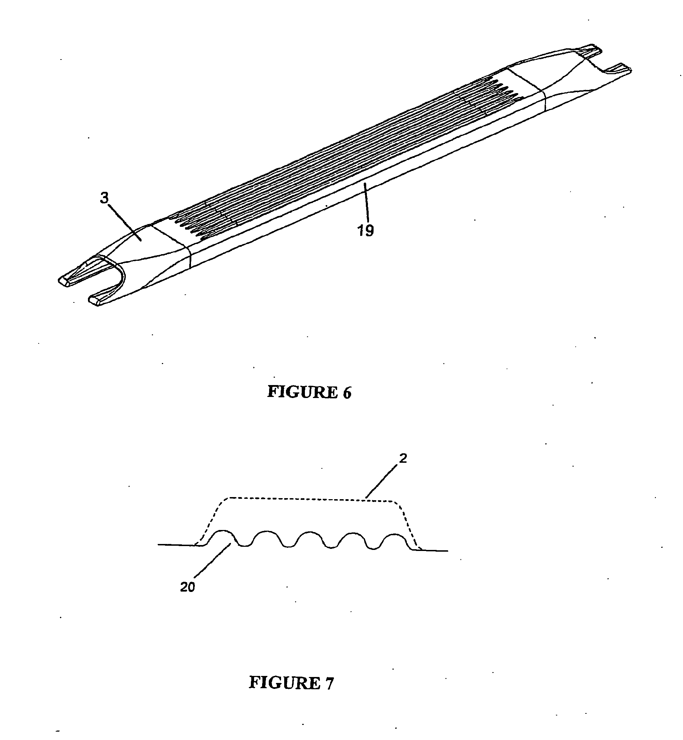

Figure 6 shows an embodiment of an integral eyelet opening and liner strip.
Figure 7 shows multiple proximate channels.

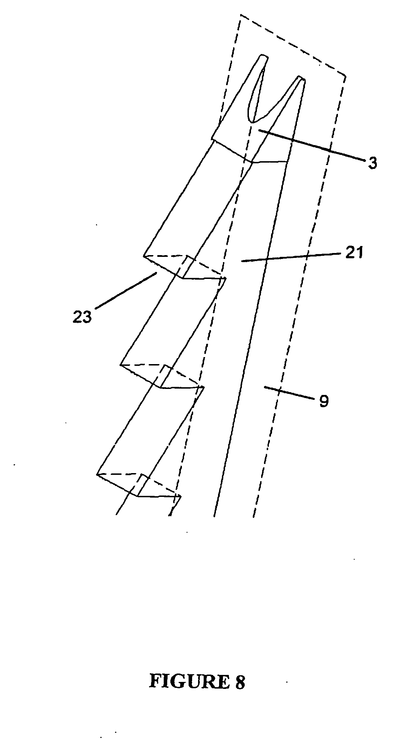

Figure 8 shows in isometric view an embodiment of a vertical channel with re-entrant multiple openings.

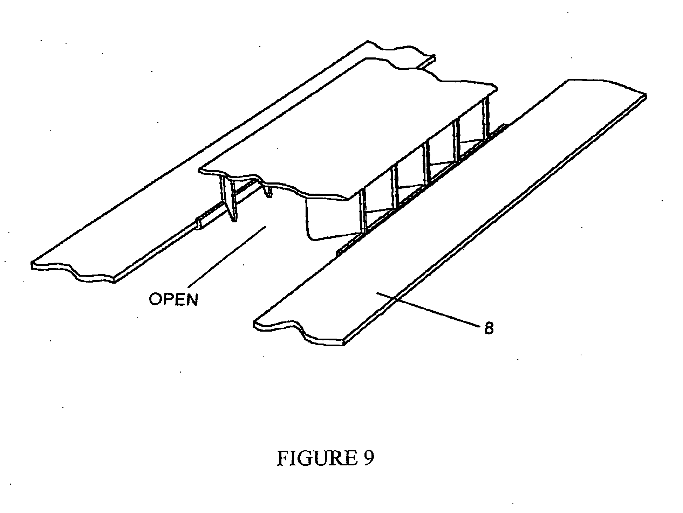

Figure 9 shows in a cut-away perspective view another embodiment of a multi-apertured channel.

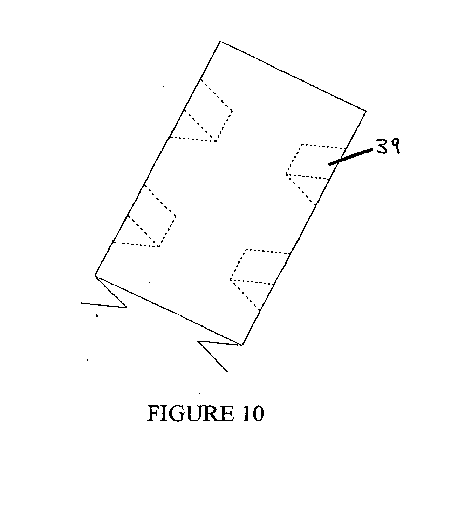

Figure 10 shows an isometric view of embodiment in which a ventilation channel is arranged with the shape memory polymer supports.

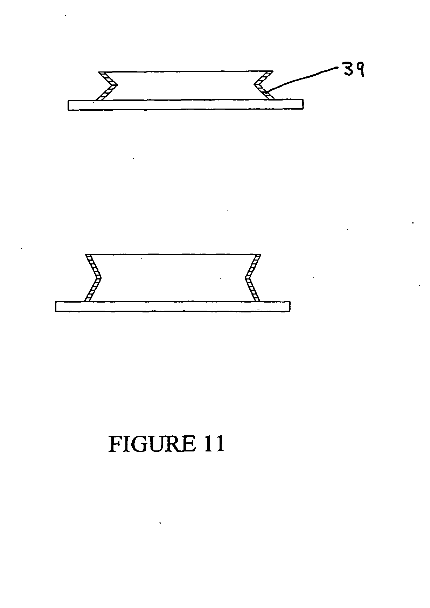

Figure 11 shows a cross section of a schematic of a ventilation channel in use with shape memory polymer supports, in the collapsed and expanded states.

Repeated use of reference numbers in the present specification and drawings is intended to represent the same or analogous features of the invention.

It is to be understood that to one skilled in the art that the following is a description of the exemplary embodiments only and is not intended as limiting the broader aspects of the present invention, which broader aspects are embodied in the exemplary fabrication. For illustrative and descriptive clarity only key items are included in the drawings. Details of trim and extraneous flanges for attachment to the apparel itself are shown only where necessary for clarity.

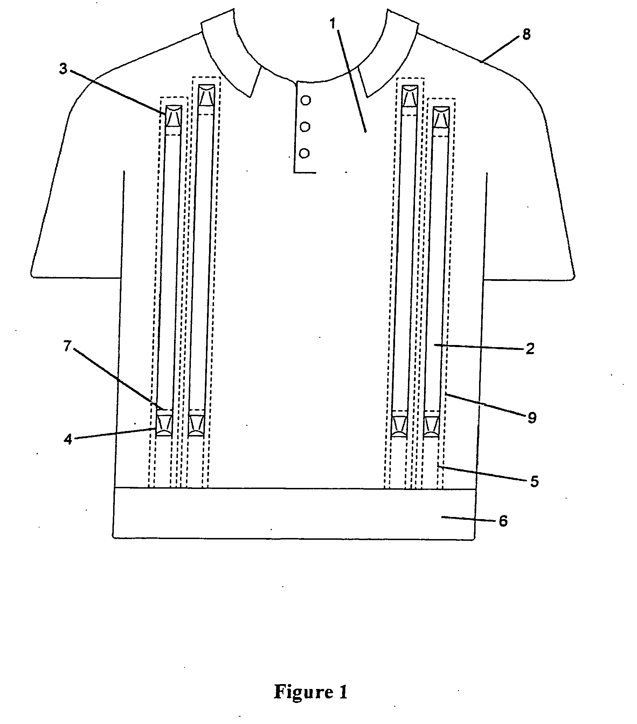

The present invention is directed to sports shirts fabricated with integral ventilation channels. Referring to Figure 1, a sports shirt 1, is shown with integral ventilation channels 2, upper opening eyelet 3 and lower opening eyelet 4. For the purposes of descriptive clarity, only the front view of the sports shirt is shown and similar channels can be assumed for the rear of the shirt. In practice, the number of channels, their spacing and their eyelet opening starting points will depend on factors such as the shape of the wearer and the type of sports activity.

The dotted line 5 shows the channel fully extended to the waist band 6. However, the lower opening eyelets 4 are preferentially situated away from the waistband 6, to ensure unobstructed contours for the channels and openings. Dotted rectangles 7 represent the open areas in the main fabric of the shirt 8, not in contact with the skin. The upper and lower edges of the rectangles are set back within the channel, thus being discreet and out of view. The channel and opening eyelets are fabricated as a separate panel 9, and joined to the main fabric 8 by means of ultrasonic welding or stitching. The panel 9 is shown schematically but has a number of practical arrangements. For instance, the panel can end at the shoulder seam or it can extend to the rear of the shirt, so that front and rear ventilation channels are fabricated as one unit. The panel material and main body fabric are a synthetic thermoplastic fabric such as COOLMAX^{®} polyester.

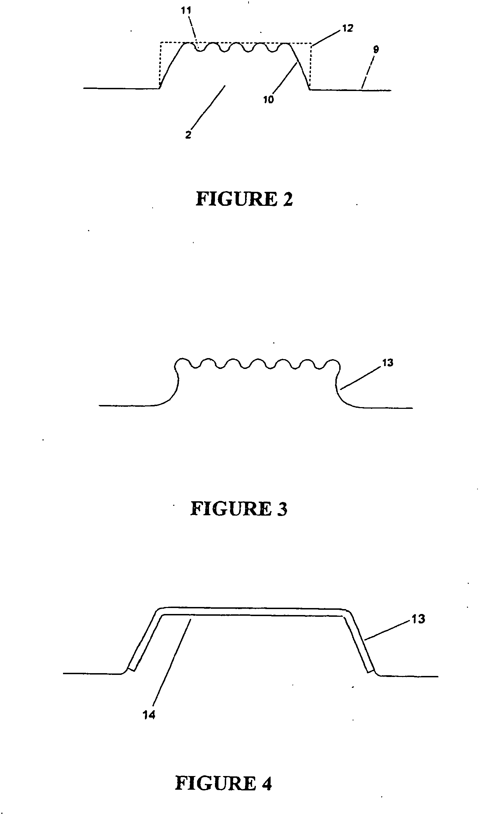

In Figure 2, channel 2 has a preferred quasi-rectangular cross-section 10, surface modulated with corrugations 11. The corrugation geometry is shown as a series of arcs but could be any simple geometry such as triangular or rectangular, the important point being that they provide rigidity by being formed as a structure with wavy localised planes.

The channel profile is obtained by thermally forming the panel material 9. The channel envelope 12, shown dotted, has width of about 15mm and height of about 5mm, with corrugation dimensions around 2mm in repeat pitch and 1mm in depth.

Those skilled in the art will recognise that the practical channel profile and corrugation, shown in the embodiment, may be modified according to fabric characteristics, however, such modification being within the spirit and substance of the present invention. Figure 3 is another channel embodiment, with corrugation applied to the channel wall 13. The corrugation structure becomes more necessary for producing a self-supporting channel as the size or span of the profile increases. As the span and size of the profile is reduced, the need for corrugation structure is reduced; however, this being at the expense of reduced air volume per unit length of channel. Simple, geometric, cross-sectional profiles such as triangles, arcs, steps or composites thereof are appropriate for cross-sectional areas typically below 40mm².

Figure 4 shows an alternative channel construction useful when the fabric material used is of thin gauge. A thermoplastic liner strip 14 has thickness of about 0.2mm and is heat formed integrally with the channel to support it. The liner strip 14, shown in cross-section, preferentially extends against the whole of the channel wall and its length. When additional non-intrusiveness is required the liner may be limited in extent or length, for instance only supporting the two side walls of the channel 10. Alternatively the liner 14 may be perforated throughout. Material for the liner strip 14 will have thermal forming properties that are similar to that of the channel fabric itself. Polyester, PVC, ABS, acetate, acrylic, nylon and composites thereof are a few suitable plastics. The liner strip 14 is an additional component, but adds flexibility to the channel profile arrangement and aesthetics and allows choice of thinner, lighter fabrics.

Figure 5 illustrates the shape of a springy eyelet opening 3 and channel 2 in isometric view. For further descriptive clarity, Figure 5 a) shows an example of channel 2 and main fabric 8 arrangements. It is obvious that the areas shown as main fabric 8 could equally be fabricated as a panel 9 as in Figure 1. Those skilled in the art will be aware of modifications to these fabrication arrangements, however, such modifications being within the substance of the invention. The eyelet 3 serves several purposes:
a) it protects the end of the fabric channel
b) it helps maintain the channel profile
c) it transforms the abrupt channel profile into a streamline shape, i.e. a lower, wider opening having a similar cross sectional area to the channel, in order to avoid snagging
d) it further masks the edge 7 of the channel.

The eyelet is injection moulded from thermoplastic including polyester, PVC, acetate, acrylic, nylon and composites thereof, its thermal characteristics matching closely those of the shirt and channel fabric. Mechanically, the eyelet is springy, durable and resistant to tearing. A slot 15 accepts the leading edge of the channel 2 and is used to anchor the channel 2 fabric from the underneath, forming a joint after ultra-sonic welding.

Typical welding points 16 are shown. The channel panel and its attached eyelet terminations 3 can be regarded as an assembly 18. A flange 17 is provided, which is used to join the panel assembly 18 to the main fabric 8, by ultra-sonic welding from the underneath.

A further example of an eyelet and channel assembly is illustrated in Figure 6. The liner strip 19 has similar function to liner strip 14, as in Figure 4, supporting the channel cross-sectional shape, but here it is integral with the springy eyelet 3 . Both upper and lower springy eyelets 3 and liner 19 are thus a single piece moulding.

Figure 7 shows the end view of multiple channels. Here multiple, closely spaced channels 20 are provided. The size of each opening is much reduced in comparison to channel profile 2, shown dotted. The number of channels and their length are variables of choice. The channel profile shown is sinusoidal in nature. Alternative shapes of triangular or rectangular corrugation are also useful practically. The reduced scale enables the channels to be incorporated as desired without eyelet openings. It will be obvious to those skilled in the art of shirt fabrication that many traditional means of strengthening the end of the channels are available, such as reinforcement by stitching, for example.

Figure 8 shows another embodiment of the invention where the channel 21 is formed as a saw-toothed surface, with an angled wall 22 and a re-entrant opening 23. Re-entrant opening 23 is preferentially open or alternatively capped with a large gauge mesh fabric. The uppermost opening has a springy eyelet 3, joined ultrasonically to the channel panel 9, to form an assembly. The construction thus provides a channel with concealed multiple air openings, thereby increasing the ventilation effects.

The length of the wall 22 may preferentially be about 9 mm and the re-entrant opening 23 about 4 mm with a channel width of about 15 mm. The angle between the wall 22 and re-entrant opening 23 is preferentially about 40 degrees. Those skilled in the art will recognise that the dimensions of the saw-tooth profile may be varied over a wide range whilst still providing ventilation benefits. The saw tooth 21 will be heat-formed similar to previous channel embodiments described and, as before, with thin gauge fabrics, the saw-tooth profile will be made self-supporting by means of a liner strip 24.

As before, the choice of liner thermoplastic, its extent and the material thickness needed for maintaining the channel profile need to be balanced against the requirement for a soft, non-intrusive channel. Preferentially, the material will be a thermoplastic matched to the shirt fabric material, such as polyester, PVC, acetate, acrylic, nylon and composites thereof, with average liner wall thickness about 0.2mm. The liner strip 24 is shaped to duplicate the channel fabric profile. Where additional non-intrusiveness is required, however, the liner is produced with regular or discrete perforations, to increase the flexibility of the support. The channel saw-tooth profile shown is arranged as in the examples of Figure 1 and Figure 2 and their accompanying descriptions, where a number of elongated vertical channels are provided.

Figure 9 shows a cut-away perspective view of another embodiment where the ventilation channel has multi-apertured side walls 10, as well as upper and lower openings terminated with eyelets. Multiple blades 27 are angled upwards to guide air flow, in sympathy with upwards air convection from the wearer's body. For clarity, the top wall of the channel is cut-away in the Figure. The blades 27 are inclined at 30 degrees to the channel long axis, preferentially with blade-to-aperture length being in the ratio of about 9:4. Channel width is about 20 mm and blade length is about 5mm, giving a clear central channel of about 15mm. Blade height is about 4mm, which, for a channel height of 5mm, ensures blade edges are not intrusive to the wearer. Preferentially the channel, flanges and blades are fabricated as an integral injection moulding with average wall thickness about 0.2mm. Preferentially, the material will be a thermoplastic similar to the shirt fabric material, such as polyester, PVC, acetate, acrylic, nylon and composites thereof. Because the blades 27 do not serve as supports, their thickness can optionally be made less than the rest of the moulding. This embodiment has an additional fabrication advantage in that it can be produced by a simple, single-action mould tool, since in plan view there are no re-entrant surfaces. Those skilled in the art will recognise that a variety of modifications to this embodiment and previous embodiments are possible, and are within the substance of the invention.

Referring to Figure 10, an isometric view of a schematic of a ventilation channel is shown, together with shape memory supports 39. The channel is shown in an intermediate state, between the collapsed and expanded states, examples of which are shown in Figure 11. A range of intermediate states exists between the collapsed and expanded states, and act as transitionary states. The collapsed and expanded states are usually the permanent states. Corresponding arrangements of the shape memory polymer supports may be programmed into the shape memory polymer's memories. In this way, below a particular temperature the polymer is in one state, and above a certain temperature the polymer is in another state. The particular and certain temperatures are usually the glass transition temperatures of the differing segments within the polymer and are not necessarily coincident. It will be obvious to the reader skilled in the art that the other mechanical properties of the segments may change with temperature, thus permitting the polymer supports to change shape.

Thus the expanded state can provide good ventilation, whilst the collapsed state provides limited or no ventilation, the ventilation channel being substantially closed. In another embodiment (not shown), there is a shape memory polymer which operates irreversibly, having only one permanent state. For example, the expanded state would be the permanent pre-programmed state. The channel would initially be configured in the collapsed state. On application of a suitable stimulus, such as heat, the polymer would expand and the channel would expand, pass through the intermediate states and assume the expanded state. The channel would then remain in this state until the temperature is lowered sufficiently that the wearer decides that ventilation is no longer required, and manually applies force to the channel such that it is reset into its collapsed state. Since the temperature is then below the glass transition temperature, the polymer would not revert to the expanded state.

## Claims

1. A sports shirt (1) comprising a main fabric (8) incorporating separate, vertical ventilation channels (2), **characterized by** said channels (2) being self-supporting and flexible; said channels (2) concealing open areas where the main fabric (8) is not in contact with the skin of a wearer and being separated from each other by areas where the main fabric is in contact with the skin of the wearer; and said channels (2) having upper and lower openings (3) and contours which are unobstructed.

2. A sports shirt as defined in claim 1, wherein said channels are substantially plane sided.

3. A sports shirt as defined in claim 1 or claim 2, wherein said channels (2) have a corrugated profile (11) along the channel length, said corrugations (11) being thermally formed in a thermoplastic fabric.

4. A sports shirt as defined in claim 3, wherein said thermoplastic fabric is a synthetic material such as polyester, acrylic, PVC, rayon, nylon, acetate or a mixture thereof.

5. A sports shirt as defined in claim 3, wherein said thermoplastic fabric is a natural fabric material, coated with a thermoplastic layer

6. A sports shirt as defined in any of claims 3 to 5, wherein said channel corrugations (11) have a depth of about 1 mm and a repeat pitch of about 2mm.

7. A sports shirt as defined in any preceding claim, wherein each of said channels (2) is shaped and supported by means of a thermoplastic liner (14).

8. A sports shirt as defined in any preceding claim, wherein the profile of each channel (2) is about 15mm wide by about 5mm deep.

9. A sports shirt as defined in any preceding claim, in which said openings are formed by springy eyelets (3), which terminate the channels (2), said eyelets (3) serving to hold the channels (2) open in the desired cross-sectional shape and providing protection to the channel edges.

10. A sports shirt as defined in claim 9, said eyelets (3) being moulded in a thermoplastic material, attached to the channel (2) and the main fabric (8) by heat-forming, adhesive bonding, ultra-sonic welding or stitching, said thermoplastic material being selected from polyester, acrylic, PVC, ABS, acetate, nylon, rayon or a mixture thereof.

11. A sports shirt as defined in claim 9 or claim 10, wherein said springy eyelet (3) is constructed such that an edge of the open area of the main fabric (9) at the end of the channel (2) is recessed within the eyelet (3) and concealed from direct view

12. A sports shirt as defined in any of claims 9 to 11, wherein said springy eyelet (3) extends into the channel (2) to support and maintain the desired cross-sectional shape.

13. A sports shirt as defined in any of claims 9 to 12, wherein said springy eyelet (3) has plane flanges (17) for joining the eyelet (3) to the main fabric (8).

14. A sports shirt as defined in any preceding claim, wherein said channels (2) are formed with a saw-tooth geometry, said channels having re-entrant openings (23).

15. A sports shirt as defined in claim 14, wherein said re-entrant openings (23) are capped with a large gauge mesh fabric.

16. A sports shirt as defined in any preceding claim, comprising multiple apertures (53) in side walls of at least one of said channels (2) and said channel (2) comprising internal, angled blades (54) for guiding ventilation through said apertures (53).

17. A sports shirt as defined in any preceding claim, wherein the ventilation channels (2) are partially or wholly made from at least one shape memory polymer.

18. A sports shirt as defined in claim 17, including channel supports (39) and/or eyelets (3) and/or channel liners (14) made from shape memory polymer, arranged so as to expand and contract the ventilation channel (2).

19. A sports shirt as defined in claim 17 or claim 18, wherein the ventilation channels (2) are approximately planar with the sports shirt main fabric (8) below a particular temperature and protrude substantially above said main fabric (8) above the particular temperature.

20. A sports shirt as defined in any of claims 17 to 19, further including electronic means for actuating the shape memory polymer.

## Patentansprüche

1. Sporthemd (1) mit einem Hauptgewebe (8), mit separaten, vertikalen Ventilationskanälen (2), **dadurch gekennzeichnet, dass** die Kanäle (2) selbsttragend und flexibel sind, wobei die Kanäle (2) offene Bereiche verbergen, in denen das Hauptgewebe (8) nicht in Kontakt mit der Haut des Trägers in Kontakt steht und voneinander durch Bereiche getrennt sind, in denen das Hauptgewebe in Kontakt mit der Haut des Trägers steht, und wobei die Kanäle (2) obere und untere Öffnungen (3) und Konturen, welche nicht blockiert sind, aufweisen.

2. Sporthemd nach Anspruch 1, wobei die Kanäle im Wesentlichen mit ebenen Seiten versehen sind.

3. Sporthemd nach Anspruch 1 oder Anspruch 2, wobei die Kanäle (2) ein gewelltes Profil (11) entlang der Kanallänge aufweisen, wobei die Wellungen (11) in einem thermoplastischen Gewebe thermisch gebildet sind.

4. Sporthemd nach Anspruch 3, wobei das thermoplastische Gewebe ein synthetisches Material wie z. B. Polyester, Acryl, PVC, Rayon, Nylon, Acetat oder eine Mischung hiervon ist.

5. Sporthemd nach Anspruch 3, wobei das thermoplastische Gewebe ein natürliches Gewebematerial ist, welches mit einer thermoplastischen Schicht bedeckt ist.

6. Sporthemd nach einem der Ansprüche 3 bis 5, wobei die Kanalwellungen (11) eine Tiefe von etwa 1 mm und eine Wiederholungsteilung von etwa 2 mm haben.

7. Sporthemd nach einem der vorhergehenden Ansprüche, wobei jeder der Kanäle (2) mittels eines thermoplastischen Futters (14) geformt und gestützt wird.

8. Sporthemd nach einem der vorhergehenden Ansprüche, wobei das Profil jedes Kanals (2) etwa 15 mm breit und etwa 5 mm tief ist.

9. Sporthemd nach einem der vorhergehenden Ansprüche, bei dem die Öffnungen durch federnde Ösen (3) gebildet werden, welche die Kanäle (2) abschließen, wobei die Ösen (3) dazu dienen, die Kanäle (2) in der gewünschten Querschnittsform offen zu halten und einen Schutz für die Kanalkanten zu bieten.

10. Sporthemd nach Anspruch 9, wobei die Ösen (3) aus einem thermoplastischen Material gegossen sind und an dem Kanal (2) und dem Hauptgewebe (8) durch Hitzeformen, Klebebindung, Ultraschallschweißen oder Nähen angebracht sind, wobei das thermoplastische Material ausgewählt ist aus Polyester, Acryl, PVC, ABS, Acetat, Nylon, Rayon oder einer Mischung hiervon.

11. Sporthemd nach Anspruch 9 oder Anspruch 10, wobei die federnde Öse (3) so konstruiert ist, dass ein Rand des offenen Bereichs des Hauptgewebes (8) am Ende des Kanals (2) innerhalb der Öse (3) zurückgenommen ist und vor einem direkten Anblick versteckt ist.

12. Sporthemd nach einem der Ansprüche 9 bis 11, wobei die federnde Öse (3) sich in den Kanal (2) erstreckt, um die gewünschte Querschnittsform zu stützen und aufrecht zu erhalten.

13. Sporthemd nach einem der Ansprüche 9 bis 12, wobei die federnde Öse (3) ebene Flansche (17) zur Verbindung der Öse (3) mit dem Hauptgewebe (8) aufweist.

14. Sporthemd nach einem der vorhergehenden Ansprüche, wobei die Kanäle (2) mit einer Sägezahngeometrie geformt sind, wobei die Kanäle rückwärtige Eingangsöffnungen (23) haben.

15. Sporthemd nach Anspruch 14, wobei die nach hinten zeigenden Eingangsöffnungen (23) mit einem großmaschigen Gittergewebe bedeckt sind.

16. Sporthemd nach einem der vorhergehenden Ansprüche, mit einer Vielzahl von Öffnungen (53) in Seitenwänden wenigstens eines der Kanäle (2) und wobei der Kanal (2) innere angewinkelte Leiteinrichtungen (54) zum Führen einer Ventilation durch die Öffnungen (53) aufweist.

17. Sporthemd nach einem der vorhergehenden Ansprüche, wobei die Ventilationskanäle (2) teilweise oder ganz aus wenigstens einem Form-Memory-Polymer hergestellt sind.

18. Sporthemd nach Anspruch 17, mit Kanalträgern (39) und/oder Ösen (3) und/oder Kanalfuttereinrichtungen (14), welche aus einem Form-Memory-Polymer gebildet sind, die so angeordnet sind, um den Ventilationskanal (2) aufzuspannen und zusammenzuziehen.

19. Sporthemd nach Anspruch 17 oder Anspruch 18, wobei Ventilationkanäle (2) unterhalb einer bestimmten Temperatur annähernd eben mit dem Hauptgewebe (8) des Sporthemds liegen und oberhalb der bestimmten Temperatur im Wesentlichen über das Hauptgewebe (8) vorragen.

20. Sporthemd nach einem der Ansprüche 17 bis 19, mit einer elektronischen Einrichtung zur Aktivierung des Form-Memory-Polymers.

## Revendications

1. Maillot de sport (1) comprenant un tissu principal (8) comprenant des canaux de ventilation verticaux et séparés (2), **caractérisé en ce que** lesdits canaux (2) sont autoportants et flexibles ; lesdits canaux (2) dissimulant des régions ouvertes dans lesquelles le tissu principal (8) n'est pas en contact avec le peau de l'utilisateur et étant séparé les uns des autres par des régions dans lesquelles le tissu principal est en contact avec la peau de l'utilisateur ; et lesdits canaux (2) ayant des ouvertures supérieures et inférieures (3) et des contours qui ne sont pas obstrués.

2. Maillot de sport selon la revendication 1, dans lequel lesdits canaux sont essentiellement à côtés plans.

3. Maillot de sport selon la revendication 1 ou la revendication 2, dans lequel lesdits canaux (2) présentent un profil ondulé (11) le long de la longueur des canaux, lesdites ondulations (11) étant formées thermiquement dans un tissu thermoplastique.

4. Maillot de sport selon la revendication 3, dans lequel ledit tissu thermoplastique est un matériau synthétique tel que le polyester, l'acrylique, le PVC, la rayonne, le nylon, l'acétate ou un mélange de ceux-ci.

5. Maillot de sport selon la revendication 3, dans lequel ledit tissu thermoplastique est un matériau naturel, enduit d'une couche thermoplastique.

6. Maillot de sport selon l'une quelconque des revendications 3 à 5, dans lequel lesdites ondulations des canaux (11) présentent une profondeur d'environ 1 mm et un pas de répétition d'environ 2 mm.

7. Maillot de sport selon l'une quelconque des revendications précédentes, dans lequel chacun desdits canaux (2) est formé et supporté au moyen d'une chemise thermoplastique (14).

8. Maillot de sport selon l'une quelconque des revendications précédentes, dans lequel le profil de chaque canal (2) présente une largeur d'environ 15 mm sur une profondeur d'environ 5 mm.

9. Maillot de sport selon l'une quelconque des revendications précédentes, dans lequel lesdites ouvertures sont formées par des oeillets souples (3), qui terminent les canaux (2), lesdits oeillets (3) permettant de maintenir les canaux (2) ouverts dans la forme transversale souhaitée et protégeant les bords de canaux.

10. Maillot de sport selon la revendication 9, lesdits oeillets (3) étant moulés dans un matériau thermoplastique, fixé au canal (2) et au tissu principal (8) par formage à chaud, assemblage par collage, soudage ultrasonique ou couture, ledit matériau thermoplastique étant choisi parmi le polyester, l'acrylique, le PVC, l'ABS, l'acétate, le nylon, la rayonne ou un mélange de ceux-ci.

11. Maillot de sport selon la revendication 9 ou la revendication 10, dans lequel ledit oeillet à ressort (3) est construit de sorte qu'un bord de la région ouverte du tissu principal (9) à l'extrémité du canal (2) est enfoncé dans l'oeillet (3) et dissimulé à la vue.

12. Maillot de sport selon l'une quelconque des revendications 9 à 11, dans lequel ledit oeillet à ressort (3) s'étend dans le canal (2) pour supporter et maintenir la forme transversale souhaitée.

13. Maillot de sport selon l'une quelconque des revendications 9 à 12, dans lequel ledit oeillet à ressort (3) présente des rebords plans (17) pour joindre l'oeillet (3) au tissu principal (8).

14. Maillot de sport selon l'une quelconque des revendications précédentes, dans lequel lesdits canaux (2) sont formés avec une géométrie en dents de scie, lesdits canaux ayant des ouvertures réentrantes (23).

15. Maillot de sport selon la revendication 14, dans lequel lesdites ouvertures réentrantes (23) sont encapsulées avec un tissu maillé à grand calibre.

16. Maillot de sport selon l'une quelconque des revendications précédentes, comprenant des ouvertures multiples (53) dans des parois latérales d'au moins un desdits canaux (2) et ledit canal (2) comprenant des lames obliques internes (54) pour guider la ventilation à travers lesdites ouvertures (53).

17. Maillot de sport selon l'une quelconque des revendications précédentes, dans lequel les canaux de ventilation (2) sont partiellement ou complètement constitués d'au moins un polymère à mémoire de forme.

18. Maillot de sport selon la revendication 17, comprenant des supports de canaux (39) et/ou des oeillets (3) et/ou des chemises de canaux (14) constitués de polymère à mémoire de forme, disposés de manière à dilater et à contracter le canal de ventilation (2).

19. Maillot de sport selon la revendication 17 ou la revendication 18, dans lequel les canaux de ventilation (2) sont approximativement planaires avec le tissu principal de maillot de sport (8) sous une température particulière et est projeté essentiellement au-dessus dudit tissu principal (8) au-dessus la température particulière.

20. Maillot de sport selon l'une quelconque des revendications 17 à 19, comprenant en outre des moyens électroniques pour activer le polymère à mémoire de forme.
